# FASCICULE DE BREVET EUROPEEN

(11) **EP 0 636 960 B1**
(45) Date de publication et mention de la délivrance du brevet: **19.03.1997**
(21) Numéro de dépôt: 94401609.6
(22) Date de dépôt: 12.07.1994
(51) Int. Cl.: G05D 23/02

(54) **Robinet thermostatique**
Thermostatventil
Thermostatic valve

(30) Priorité: 30.07.1993 FR 9309441
(43) Date de publication de la demande: 01.02.1995
(73) Titulaire: COMAP société anonyme, F-69008 Lyon (FR)
(72) Inventeur: Leger, Jacky, F-82132 Abbeville (FR)
(74) Mandataire: Maureau, Philippe

(56) Documents cités:
- EP-A- 0 002 934
- EP-A- 0 136 388
- DE-A- 2 537 033
- DE-C- 3 834 438
- FR-A- 2 373 006
- GB-A- 991 354

## Description

L'invention concerne les robinets thermostatiques, destinés à assurer le maintien automatique de la température en agissant sur un débit de fluide, notamment dans les installations de chauffage.

Les robinets thermostatiques connus sont constitués de deux éléments, assemblés par l'installateur lorsqu'il réalise l'installation de chauffage, c'est-à-dire sur chantier, assurant respectivement les deux fonctions énoncées plus haut. Ces deux éléments sont un corps de robinet, comportant le mécanisme de réglage du débit et coiffé d'une bonnette de protection pouvant jouer le rôle de bouton de manoeuvre pour une utilisation en robinet conventionnel, destinée à être retirée lors de l'assemblage du corps avec une tête thermostatique, et la tête thermostatique assurant le maintien de la température en agissant sur ce même mécanisme de réglage du débit.

On connaît notamment des robinets thermostatiques dont le corps comporte un siège circulaire ayant un axe central perpendiculaire à l'axe longitudinal des conduites entre lesquelles le robinet est destiné à être inséré, siège adapté à être sélectivement obturé par un clapet en vue d'isoler ou de mettre en communication une chambre d'entrée et une chambre de sortie, ce clapet appartenant à un équipage mobile monté coulissant longitudinalement le long de l'axe central du siège à l'intérieur d'un dispositif de guidage et de rappel vissé dans le corps. L'équipage mobile de ce corps est constitué, en dehors du clapet, d'une tige de clapet dont une extrémité est fixée dans le clapet avec interposition d'une rondelle de rigidification noyée dans ce clapet, et d'une aiguille de commande dont une extrémité est fixée dans l'extrémité de la tige de clapet opposée au clapet et dont l'extrémité opposée est adaptée à être actionnée par la bonnette ou par l'équipage mobile de la tête thermostatique et est donc en appui contre la bonnette lorsque le corps de robinet, étant stocké muni de celle-ci, a son clapet en position d'obturation ; une bague d'arrêt est solidarisée autour de l'aiguille de commande approximativement au milieu de la longueur de celle-ci, pour limiter l'amplitude de son coulissement comme cela sera précisé dans la suite. Le dispositif de guidage et de rappel comprend, s'étendant le long de l'axe central du siège, un chapeau vissé dans le corps et un presse-étoupe vissé dans le chapeau à l'opposé du siège, percés centralement de part en part pour permettre le coulissement respectivement de la tige de clapet et l'aiguille ; le dispositif de guidage et de rappel comprend aussi un joint torique d'étanchéïfication disposé dans un logement creusé dans le presse-étoupe et déformé entre l'aiguille, autour de laquelle il est enfilé, les parois de ce logement, et un bouchon-cuvette également disposé dans un logement du presse-étoupe de plus grandes dimensions et creusé dans la face de celui-ci qui est tournée vers le siège ; le dispositif de guidage et de rappel comprend également un ressort hélicoïdal de rappel s'étendant dans une chambre du chapeau autour de la partie de la tige de clapet qui est logée dans cette chambre, ressort dont une extrémité prend appui contre la paroi d'extrémité de la chambre qui est du côté du siège et dont l'extrémité opposée prend appui contre une collerette de la tige de clapet réalisée au voisinage de l'extrémité de celle-ci qui est à l'opposé du siège, la collerette étant interposée entre cette extrémité du ressort de rappel et la bague d'arrêt déjà mentionnée. Avec cette structure, lorsque l'aiguille est poussée vers le siège, elle entraîne dans son mouvement la tige de clapet et le clapet lui-même, qui vient obturer le siège tandis que le ressort hélicoïdal de rappel est comprimé entre la paroi d'extrémité de sa chambre et la collerette de la tige de clapet ; lorsque l'aiguille n'est plus poussée, le ressort rappelle la tige de clapet et ainsi le clapet lui-même à distance du siège, jusqu'à ce que la bague d'arrêt vienne en contact du bouchon cuvette.

Une tête thermostatique adaptée à coopérer avec un tel corps présente également une structure coaxiale et comporte une douille principale autour de laquelle est vissé un bouton de manoeuvre gradué lui servant de capot protecteur ainsi qu'à un élément thermostatique logé à l'intérieur et dont la course de vissage détermine le domaine de réglage du thermostat ; l'ensemble douille-bouton de manoeuvre contient en outre l'équipage mobile de la tête, une butée fixe qui est fixée à la douille, ainsi que des butées amovibles solidarisées également à celle-ci et permettant grâce à un système de fentes réparties dans le pourtour de la douille et dans lesquelles elles peuvent être sélectivement positionnées, de délimiter le domaine de réglage du thermostat ; des graduations portées par le pourtour du bouton de manoeuvre permettent le repérage de la position de celui-ci et ainsi le réglage de la tête ; la douille porte un écrou de liaison de la tête thermostatique au corps de robinet. A l'intérieur du bouton de manoeuvre, l'élément thermostatique comporte un piston saillant en direction de l'alésage de l'écrou de liaison, qui est emmanché dans une région d'extrémité d'un poussoir dont la région d'extrémité opposée loge un insert destiné à venir en appui contre l'extrémité libre de l'aiguille du corps de robinet ; un pivot est enfilé autour de l'extrémité du poussoir opposée à l'écrou de liaison, un ressort de rappel étant en appui entre ce pivot qu'il maintient contre une collerette du poussoir et une paroi opposée de la douille, à savoir une paroi interne proche de l'extrémité de la douille portant l'écrou de liaison ; un ressort de sur-course disposé concentriquement à l'intérieur du ressort de rappel est en appui également entre le pivot, et une autre collerette portée par le poussoir du côté de l'écrou de liaison. Lorsque le piston de l'élément thermostatique est étiré vers l'écrou de liaison, il entraîne le poussoir et son insert à pousser l'aiguille du corps vers le siège à l'encontre de l'effort du ressort de rappel, et lorsqu'il est rétracté, les ressorts agissent pour le rappel du pivot et du poussoir, la longueur de la course à accomplir par le piston avant d'aboutir à l'obturation du siège pour le clapet étant préalablement réglée par rotation du bouton de manoeuvre dans les limites fixées par les butées.

Ainsi, ces robinets connus font appel à un grand nombre de composants, ce qui implique un coût, un encombrement, et une durée de montage importants.

L'invention a pour but de remédier aux inconvénients mentionnés plus haut des robinets thermostatiques et également de créer un robinet thermostatique complet ne nécessitant pas d'assemblage sur chantier, dont le faible volume permette une meilleure intégration sur une installation de chauffage et ainsi une meilleure esthétique, et aussi dont la maintenance et le dépannage puissent être assurés de manière simple, notamment sans avoir à vidanger l'installation, essentiellement au moyen d'un outil adapté.

A cet effet, l'invention concerne un robinet thermostatique du type à clapet commandé par un élément thermostatique dans un ensemble comportant un corps de robinet, une douille vissée au corps, un bouton de manoeuvre vissé à la douille, et un cache enveloppant au moins une partie du bouton de manoeuvre et de l'élément thermostatique, robinet caractérisé en ce que le clapet est fixé à une partie d'extrémité d'un poussoir logé dans une chambre de la douille et solidarisé à un organe actionné par l'élément thermostatique, le clapet, le poussoir et l'organe actionné par l'élément thermostatique étant montés coulissants par rapport à la douille sous l'action de l'élément thermostatique lequel est positionné dans le bouton de manoeuvre, et en ce qu'un ressort de rappel est en appui à l'une de ses extrémités contre le poussoir et à l'extrémité opposée contre le fond de la chambre de la douille.

Grâce à ces caractéristiques, on aboutit à une structure de robinet thermostatique simple, robuste et économique, permettant, sous réserve d'utiliser un outil approprié, le remplacement d'un sous-ensemble constituant une "cartouche" thermostatique sans avoir à effectuer une vidange de l'installation sur laquelle est monté le robinet.

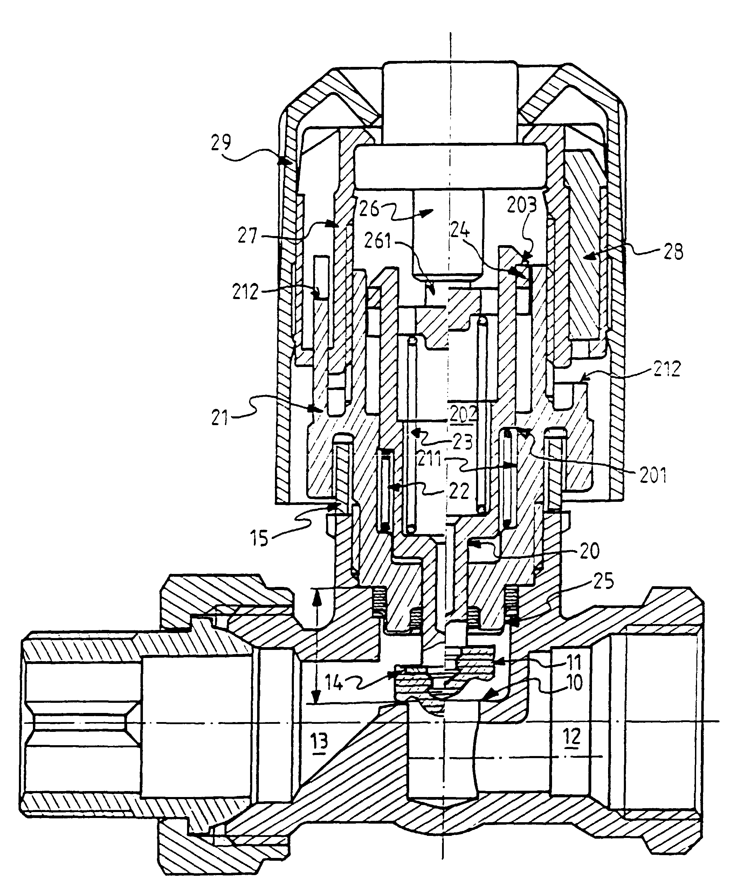

D'autres caractéristiques et avantages de l'invention ressortiront de la description qui va suivre d'une forme de réalisation de l'invention donnée à titre d'exemple non limitatif et représentée sur le dessin ci-joint qui est constitué de deux demi-coupes schématiques montrant un robinet thermostatique, du côté gauche en position d'obturation du siège du conduit, et du côté droit en position de dégagement permettant l'écoulement du fluide.

Le robinet thermostatique représenté sur le dessin, destiné à équiper un radiateur de chauffage, comporte un corps sur lequel une cartouche thermostatique interchangeable est montée en usine.

Le corps comporte un siège circulaire 10 ayant un axe central perpendiculaire à l'axe longitudinal des conduites entre lesquelles le robinet est destiné à être inséré ; un clapet 11 appartenant à la cartouche, adapté à obturer sélectivement le siège en vue d'isoler ou de mettre communication une chambre d'entrée 12 et une chambre de sortie 13 du corps, est actionné de manière à être mobile en translation le long de l'axe central du siège. Le clapet 11 est porté par une extrémité d'un poussoir 20 avec interposition d'une rondelle de rigidification 14 logée dans le clapet, ce poussoir étant mobile longitudinalement le long de l'axe central du siège en étant guidé à l'intérieur d'une douille 21 montée coaxialement et rappelé par un ressort de rappel 22 hélicoïdal coopérant à cet effet avec un ressort de sur-course 23 également hélicoïdal, le poussoir 20, la douille 21 et un pivot 24 comme cela sera décrit dans la suite.

La douille 21, extérieurement filetée sur une partie de sa longueur, est vissée dans un alésage taraudé du corps s'étendant autour de l'axe central du siège 10 ; l'étanchéité entre le corps et la douille 21 est assurée au moyen d'un joint torique inséré et comprimé entre le corps, la région de l'extrémité de la douille proche du siège réalisée sous la forme d'un fût de centrage de plus petit diamètre que la partie filetée de la douille, et un bouchon-cuvette 25 emboîté autour du fût de centrage et percé d'un trou central pour le passage du poussoir 20 ; l'étanchéïté entre la douille et le poussoir est assurée au moyen d'un joint torique inséré et comprimé entre les parois d'un logement de la douille débouchant à l'extrémité du fût de centrage, le poussoir 20, et le bouchon-cuvette 25.

Le poussoir 20 étant guidé dans une chambre de guidage 211 de la douille 21, le ressort de rappel 22 est en pression entre le fond de cette chambre de guidage 211 et un épaulement 201 créé à la périphérie du poussoir ; le ressort de sur-course 23 est en pression entre le fond d'une chambre 202 creusée dans le poussoir depuis son extrémité opposée à celle portant le clapet, et le pivot 24 réalisé sous la forme d'une bague dont la périphérie est enfilée autour du poussoir 20 ; le pivot 24 est ainsi maintenu par le ressort de sur-course 23 en appui contre une collerette 203 que le poussoir 20 comporte à son extrémité opposée au clapet, et la région centrale du pivot peut ainsi être actionnée par un élément thermostatique 26, et plus précisément par le piston 261 de cet élément thermostatique, en appui contre elle.

Une bague-frein 15 munie d'ergots d'arrêt permettant si nécessaire son cisaillement, positionnée sur le corps et prolongeant la paroi périphérique de l'alésage taraudé de celui-ci, est interposée entre le corps et la douille 21.

Un bouton de manoeuvre 27 auquel est fixée une butée fixe 24 coopère avec la douille 21 au moyen d'un pas de vis servant d'une part à sa solidarisation à la douille et d'autre part au réglage du thermostat ; au moins un arrêtoir 212 réalisé à l'extrémité de la paroi extérieure de la douille 21 opposée à son extrémité proche du clapet coopère avec la butée 28 pour limiter la course de réglage du bouton de manoeuvre, qui comporte par ailleurs, à son extrémité opposée à celle par laquelle il est vissé autour de la douille, un fond servant d'appui à l'élément thermostatique 26 lequel est retenu dans le bouton 27 par clipsage.

Un cache 29 portant des graduations enveloppe au moins partiellement le bouton de manoeuvre 27 et plus particulièrement le pourtour latéral de celui-ci auquel il est clipsé, ainsi que la partie du pourtour de la douille 21 qui n'est pas insérée dans le bouton 27, et la majeure partie de la bague-frein 15.

L'assemblage du robinet peut être effectué, manuellement ou de manière automatisée, comme suit :

On assemble, pour constituer un sous-ensemble que l'on désignera dans la suite sous le nom de sous-ensemble A, le poussoir 20, le ressort de sur-course 23 que l'on introduit dans le poussoir 20, et le pivot 24.

On assemble pour constituer un sous-ensemble B, la douille 21, les joints toriques que l'on place respectivement à l'extérieur et à l'intérieur du fût de centrage, et le bouchon-cuvette 25 que l'on emboîte autour du fût de centrage.

Puis on assemble, pour constituer un sous-ensemble C, le sous-ensemble A, le ressort de rappel 22 que l'on enfile autour du poussoir 20, le sous-ensemble B dont on coiffe le sous-ensemble A, la rondelle 14 et le clapet 11.

Apres quoi, on assemble, pour constituer un sous-ensemble D formannt la cartouche, le sous-ensemble C, et l'élément thermostatique 26 que l'on introduit sur le bouton de manoeuvre 27 dont on coiffe les précédents éléments.

Ensuite, on étalonne le sous-ensemble D à une température donnée, par exemple à 21°C, en vissant le bouton de manoeuvre 27 sur la douille 21 de manière à obtenir une cote prédéterminée entre d'une part l'épaulement de transition entre la partie filetée de la douille et son fût de centrage, et d'autre part la zone du clapet 11 destinée à venir en appui contre le siège.

Puis on met en place la butée fixe 28 dans le bouton de manoeuvre 27, et on obtient ainsi, constitué du sous-ensemble D et de la butée 28, un sous-ensemble E qui n'est autre que la cartouche interchangeable déjà mentionnée.

Ensuite, on incorpore la bague-frein 15 en la positionnant sur le corps, alors que celui-ci est déjà assemblé au moyen d'un écrou avec une douille de montage sur l'une des conduites.

Après quoi on effectue un contrôle d'étanchéïté, on habille la cartouche au moyen du cache 29 que l'on dispose dans la position désirée, et il suffit de contrôler le bon fonctionnement du robinet c'est-à-dire le passage du clapet comme souhaité de la position d'isolement à la position de mise en communication de la chambre d'entrée et de la chambre de sortie du corps.

Selon que le robinet est destiné à être monté à droite ou à gauche d'un radiateur, le cache doit être tourné de 180 degrés pour amener les repères dans la position correspondante.

Comme tout robinet thermostatique conventionnel, celui-ci compare de façon continue la température du local à celle prédéterminée par l'utilisateur qui a positionné le bouton de manoeuvre sur le repère correspondant à la température choisie.

A cet effet, l'élément thermostatique prend en compte les variations de température du local et agit sur l'ouverture ou la fermeture du clapet par l'intermédiaire du pivot, du ressort, et du poussoir, ce qui permet d'augmenter ou de réduire le débit d'eau.

Dans le cas de surchauffe par ensoleillement, fonctionnement d'une cheminée, etc., le ressort de sur-course absorbe la dilatation de l'élément thermostatique. La butée définit la plage de régulation.

La bague-frein assure le verrouillage de la liaison douille-corps, et évite le dévissage lors de la manoeuvre en ouverture du bouton de manoeuvre avec le cache. Pour désolidariser cette liaison, il suffit de détruire la bague par cisaillement des ergots d'arrêt.

Un outil adapté permet de démonter et de remplacer la cartouche thermostatique sans vidanger l'installation.

Ces avantages sont obtenus au moyen d'une structure simple utilisant un minimum de composants, et notamment en évitant la fabrication et le montage, en ce qui concerne la tête de robinet, d'un écrou de liaison et d'un insert, en en ce qui concerne le corps, d'un presse-étoupe, d'un chapeau, d'une tige de clapet, d'un ressort de rappel, d'une aiguille de commande, d'un circlips, et d'une bonnette de protection provisoire.

## Revendications

1. Robinet thermostatique du type à clapet (11) commandé par un élément thermostatique (26) dans un ensemble comportant un corps de robinet, une douille (21) vissée au corps, un bouton de manoeuvre (27) vissé à la douille, et un cache (29) enveloppant au moins une partie du bouton de manoeuvre et de l'élément thermostatique, robinet caractérisé en ce que le clapet (11) est fixé à une partie d'extrémité d'un poussoir (20) logé dans une chambre (211) de la douille (21) et solidarisé à un organe (24) actionné par l'élément thermostatique (26), le clapet, le poussoir et l'organe actionné par l'élément thermostatique étant montés coulissants par rapport à la douille sous l'action de l'élément thermostatique lequel est positionné dans le bouton de manoeuvre (27), et en ce qu'un ressort de rappel (22) est en appui à l'une de ses extrémités contre le poussoir (20) et à l'extrémité opposée contre le fond de la chambre (211) de la douille (21).

2. Robinet selon la revendication 1, caractérisé en ce qu'il comporte un ressort de sur-course (23) logé dans le poussoir (20) et en appui à l'une de ses extrémités contre une face de celui-ci et à l'autre extrémité contre ledit organe (24) actionné par l'élément thermostatique.

3. Robinet selon la revendication 1, caractérisé en ce qu'il comporte une bague-frein (15) interposée entre le corps et la douille (21).

4. Robinet selon la revendication 1, caractérisé en ce qu'il comporte des organes d'étanchéïté entre la douille (21) et respectivement le corps et le poussoir (20), en appui contre une cuvette (25) emboîtée autour d'une partie de la douille (21).

5. Robinet selon la revendication 1, caractérisé en ce que l'élément thermostatique (26) comporte un piston (261) en appui contre un organe (24) maintenu lui-même en appui contre une collerette (203) du poussoir (20) au moyen d'au moins un ressort (23).

6. Robinet selon la revendication 1, caractérisé en ce qu'une butée (28) est fixée au bouton de manoeuvre (27).

7. Robinet selon la revendication 1, caractérisé en ce que la douille (21) comporte au moins un arrêtoir (212) coopérant avec une butée (28).

8. Robinet selon la revendication 1, caractérisé en ce que le cache (29) est clipsé autour du bouton de manoeuvre (27) et comporte des graduations.

9. Robinet selon la revendication 1, caractérisé en ce qu'il comporte au moins un corps et une cartouche interchangeable habillée par un cache (29), associés au moyen d'une bague-frein (15).

## Patentansprüche

1. Thermostatventil vom Typ mit einem Sperrorgan (11), welches mittels eines Thermostatelements (26) in einer Einheit gesteuert wird, die einen Ventilkörper, eine mit dem Körper verschraubte Hülse (21), einen mit der Hülse verschraubten Bedienungsknopf (27) sowie eine wenigstens einen Teil des Bedienungsknopfs und des Thermostatelements umgebende Abdeckung (29) umfaßt, wobei das Ventil dadurch gekennzeichnet ist, daß das Sperrorgan (11) an einem Endteil eines Stößels (20) befestigt ist, welcher in einer Kammer (211) der Hülse (21) aufgenommen ist und mit einem durch das Thermostatelement (26) betätigten Organ (24) verbunden ist, wobei das Sperrorgan, der Stößel und das durch das Thermostatelement betätigte Organ unter der Wirkung des Thermostatelements, das in dem Bedienungsknopf (27) angeordnet ist, gegenüber der Hülse verschiebbar angebracht sind, und daß eine Rückstellfeder (22) an einem ihrer Enden an dem Stößel (20) und am gegenüberliegenden Ende am Boden der Kammer (211) der Hülse (21) anliegt

2. Ventil nach Anspruch 1,
dadurch gekennzeichnet, daß es eine Überhub-Feder (23) umfaßt, welche in dem Stößel (20) aufgenommen ist und an einem ihrer Enden an einer Fläche des Stößels (20) und an dem anderen Ende an dem durch das Thermostatelement betätigten Organ (24) anliegt.

3. Ventil nach Anspruch 1,
dadurch gekennzeichnet, daß es einen Sicherungsring (15) umfaßt, welcher zwischen den Körper und die Hülse (21) eingesetzt ist.

4. Ventil nach Anspruch 1,
dadurch gekennzeichnet, daß es Dichtorgane zwischen der Hülse (21) und dem Körper bzw. dem Stößel (20) umfaßt, welche an einem Schalenelement (25) anliegen, das um einen Teil der Hülse (21) herum aufgesteckt ist.

5. Ventil nach Anspruch 1,
dadurch gekennzeichnet, daß das Thermostatelement (26) einen Kolben (261) in Anlage an einem Organ (24) umfaßt, welches seinerseits mittels wenigstens einer Feder (23) an einem Bund (203) des Stößels (20) anliegt.

6. Ventil nach Anspruch 1,
dadurch gekennzeichnet, daß ein Anschlag (28) an dem Bedienungsknopf (27) befestigt ist.

7. Ventil nach Anspruch 1,
dadurch gekennzeichnet, daß die Hülse (21) wenigstens einen mit einem Anschlag (28) zusammenwirkenden Gegenanschlag (212) umfaßt.

8. Ventil nach Anspruch 1,
dadurch gekennzeichnet, daß die Abdeckung (29) um den Bedienungsknopf (27) herum aufgeklipst ist und eine Skalierung aufweist.

9. Ventil nach Anspruch 1,
dadurch gekennzeichnet, daß es wenigstens einen Körper und eine von einer Abdeckung (29) umgebene, austauschbare Patrone umfaßt, die mittels eines Sicherungsrings (15) verbunden sind.

## Claims

1. Thermostatic valve of the type with a flap (11) controlled by a thermostatic element (26) in an assembly having a valve body, a sleeve (21) screwed to the body, an operating button (27) screwed to the sleeve, and a cover (29) enclosing at least part of the operating button and thermostatic element, the valve characterised in that the flap (11) is fixed to an end part of a pusher (20) housed in a chamber (211) in the sleeve (21) and fixed to a member (24) actuated by the thermostatic element (26), the valve, pusher and member actuated by the thermostatic element being mounted so as to slide with respect to the sleeve under the action of the thermostatic element which is positioned in the operating button (27), and in that a return spring (22) is in abutment at one of its ends against the pusher (20) and at the opposite end against the bottom of the chamber (211) in the sleeve (21).

2. Valve according to Claim 1, characterised in that it has an overtravel spring (23) housed in the pusher (20) and in abutment at one of its ends against a face of the latter and at the other end against the said member (24) actuated by the thermostatic element.

3. Valve according to Claim 1, characterised in that it has a retaining ring (15) interposed between the body and the sleeve (21).

4. Valve according to Claim 1, characterised in that it has sealing members between the sleeve (21) and respectively the body and the pusher (20), in abutment against a dish (25) nesting around a part of the sleeve (21).

5. Valve according to Claim 1, characterised in that the thermostatic element (26) includes a piston (261) in abutment against a member (24) itself maintained in abutment against a collar (203) on the pusher (20) by means of at least one spring (23).

6. Valve according to Claim 1, characterised in that a stop (28) is fixed to the operating button (27).

7. Valve according to Claim 1, characterised in that the sleeve (21) has at least one shoulder (212) cooperating with a stop (28).

8. Valve according to Claim 1, characterised in that the cover (29) is snapped around the operating button (27) and has steps.

9. Valve according to Claim 1, characterised in that it has at least one body and one exchangeable cartridge clad with a cover (29), associated by means of a retaining ring (15).
